(19) Europäisches Patentamt
European Patent Office
Office européen des brevets

(11) **EP 4 617 863 A1**

(12) **EUROPEAN PATENT APPLICATION**

(43) Date of publication:
**17.09.2025 Bulletin 2025/38**

(21) Application number: **25158057.7**

(22) Date of filing: **14.02.2025**

(51) International Patent Classification (IPC):
**G06F 9/30** *(2018.01)* **G06F 9/38** *(2018.01)*
**G06N 3/02** *(2006.01)*

(52) Cooperative Patent Classification (CPC):
**G06F 9/30032; G06F 9/30018; G06F 9/30036;**
**G06F 9/30043; G06F 9/3887; G06N 3/02**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **14.03.2024 US 202463565124 P**
**12.08.2024 US 202418800758**

(71) Applicant: **INTEL Corporation**
**Santa Clara, CA 95054 (US)**

(72) Inventors:
• **HILDEBRAND, Mark**
**Santa Clara, 95054 (US)**

• **TEPPER, Mariano**
**Santa Clara, 95054 (US)**
• **AGUERREBERE OTEGUI, Maria Cecilia**
**Santa Clara, 95054 (US)**
• **BHATI, Ishwar Singh**
**Santa Clara, 95054 (US)**
• **WILLKE, Theodore**
**Santa Clara, 95054 (US)**

(74) Representative: **Rummler, Felix**
**Maucher Jenkins**
**Seventh Floor Offices**
**Artillery House**
**11-19 Artillery Row**
**London SW1P 1RT (GB)**

(54) **TURBO LOCALLY-ADAPTIVE VECTOR QUANTIZATION FOR HIGH-PERFORMANCE DISTANCE COMPUTATIONS**

(57) Systems, apparatuses and methods may provide for technology that conducts, in accordance with a first instruction, a load of a block of data into a register, wherein the block of data is to include a plurality of lanes, conducts, in accordance with a second instruction, a first bitwise mask application to each lane in the plurality of lanes, and extracts a set of vector dimensions from the block of data based on the first bitwise mask application.

**FIG. 1**

Description

<u>CROSS-REFERENCE TO RELATED APPLICATIONS</u>

The present application claims the benefit of priority to U.S. Provisional Patent Application No. 63/565,124, filed on March 14, 2024.

<u>BACKGROUND</u>

Streaming similarity searching is the process of retrieving - from a large collection of vectors that evolve over time - those vectors that are most similar to a given query vector at a given moment in time. Streaming similarity searching is a key component of countless classical real-world applications (e.g., recommender systems, advertisement matching, etc.) and in recent years the usages of streaming similarity searching have grown significantly with the rise of deep learning (DL) models that can translate semantic affinities into spatial similarities and consequently enable semantic search.

<u>BRIEF DESCRIPTION OF THE DRAWINGS</u>

The various advantages of the embodiments will become apparent to one skilled in the art by reading the following specification and appended claims, and by referencing the following drawings, in which:

FIG. 1 is an illustration of an example of a retrieval augmented generation (RAG) workflow according to an embodiment;
FIG. 2 is a pseudo code listing of an example of a traversal of a directed graph according to an embodiment;
FIG. 3 is a comparative illustration of an example of a locally-adaptive vector quantization (LVQ) memory layout and an enhanced memory layout according to an embodiment;
FIG. 4 is an illustration of an example of an unpacking of a block of data according to LVQ;
FIG. 5 is an illustration of an example of an enhanced unpacking of a block of data according to an embodiment;
FIG. 6 is a flowchart of an example of a method of unpacking a block of data according to an embodiment;
FIG. 7 is a block diagram of an example of a performance-enhanced computing system according to an embodiment;
FIG. 8 is an illustration of an example of a semiconductor package apparatus according to an embodiment;
FIG. 9 is a block diagram of an example of a processor according to an embodiment; and
FIG. 10 is a block diagram of an example of a multi-processor based computing system according to an embodiment.

<u>DETAILED DESCRIPTION</u>

Retrieval augmented generation (RAG) is an artificial intelligence (AI) model retraining alternative that can create a domain-specific large language model (LLM) by augmenting open-source pre-trained models with both proprietary and open data. Accordingly, RAG develops business-specific results, while keeping data safe and secure (e.g., without sharing the data with third-party large foundation models). Indeed, RAG can be deployed in a wide range of industries such as, for example, consumer goods and retails, healthcare and medicine, manufacturing, media and entertainment, financial services, and so forth.

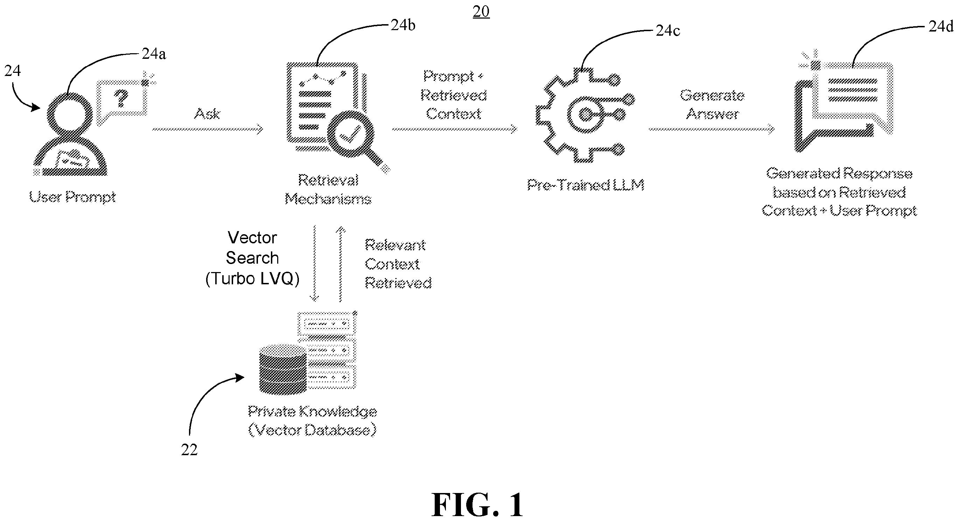

FIG. 1 shows an RAG workflow 20 in which private knowledge 22 (e.g., custom-built knowledge base stored in a vector database) is added into a prompt stream 24 (24a-24d) of an AI model as dynamic, query-dependent data. In the illustrated example, a first stage 24a of the prompt stream 24 conducts user query processing, a second stage 24b of the prompt stream 24 retrieves relevant contextual data (e.g., "context") from the private knowledge 22, a third stage 24c incorporates the relevant data into the input of a pre-trained LLM (e.g., source model), and a fourth stage 24d outputs a generated response based on the retrieved context and the user prompt. The prompt and the retrieved context enrich the output of the pre-trained LLM, delivering more relevant and accurate results.

More particularly, the second stage 24b of the prompt stream 24 converts the user prompt into a vector embedding and uses vector searching to find similar content in the vector database of the private knowledge 22 (e.g., calculating the distance between the user prompt and the data retrieved from the vector database). The vector database can be pre-constructed from PDF (portable document format) files, logs, transcripts, and so forth. The most relevant data is retrieved, incorporated with the user prompt, and passed to the pre-trained model of the third stage 24c for inference service and final output generation. This context incorporation provides models with additional information unavailable during pretraining, better aligning the models with the task or domain of interest of the user. Because RAG may not require retraining or fine-tuning the model, RAG can be an efficient way to add the data of an organization to provide context to an LLM.

As will be discussed in greater detail, the technology described herein uses turbo locally-adaptive vector quantization ("Turbo LVQ") to retrieve the relevant contextual data from the vector database. More particularly, turbo LVQ boosts distance calculation performance by modifying the underling layout of the vector data to streamline the use of the context retrieval with SIMD (single instruction multiple data) instructions. Turbo LVQ significantly accelerates end-to-end similarity searching.

The amount of unstructured data in similarity searching is constantly growing at an accelerated pace. Today, databases with billions of vectors, each with hundreds of dimensions, are becoming standard. Data-driven indices, among which graph-based approaches dominate, stand out by offering fast and highly accurate searches for billions of high-dimensional vectors. The search speed, however, is still the bottleneck in the end-to-end runtime of applications using similarity searching. The computation of fast distance calculations is the main compute kernel in the critical execution path.

Among other similarity search approaches, graph-based methods exhibit high accuracy and performance. In such solutions, the index consists of a directed graph, where each vertex corresponds to a dataset vector and edges represent neighbor-relationships between vectors so that the graph can be efficiently traversed to find the nearest neighbors in sub-linear time.

Despite requiring fewer memory accesses per query, graph-based search algorithms continue to offer limited throughput and a substantial memory footprint at very large database sizes, making single-machine deployment challenging. Many works have focused on reducing the number of distance computations per query further by changing the parameters of the graph to lower the number of points visited per query. Although such an approach lowers latency and increases query throughput, the approach does so at the expense of recall (e.g., the fraction of relevant instances that are retrieved) and with little reduction in memory consumption. Since applications typically demand a strict lower bound on recall, there are limits to this approach.

The random memory access patterns that accompany graph algorithms present further challenges to the throughput of the system. The inability to effectively prefetch vectors with a hardware prefetcher means that the latency of accessing random vectors cannot be easily hidden and may quickly become a throughput bottleneck. Furthermore, vectors are difficult to cache due to the size of the index. Although most large-scale similarity search solutions put more emphasis on the computational intensity of this workload, the simplicity of the distance computation kernel and the aforementioned fetching issues ultimately make the workload memory-bandwidth limited. Many billion-scale similarity search systems, however, lack the high-performance computing "block-and-tackling" involved with achieving enough distance computation performance to relieve pressure on the memory subsystem.

Gains may be made by performing distance computations on compressed vectors, thereby lowering both the computation and memory footprint. Compression, however, introduces new challenges such as lowering of recall. Product Quantization and other lossy compression methods are often used to reduce the memory footprint, but incur more expensive similarity computations and involve the auxiliary storage of uncompressed vectors to boost recall during a final re-ranking operation. Other methods introduce too much distortion in the distances (e.g., dimensionality reduction and standard scalar quantization), leading to unacceptable accuracy.

Recently, locally-adaptive vector quantization (LVQ), has been introduced. LVQ uses simple and efficient compression technology to reduce memory pressure and a built-in two-level quantization remainder system that avoids maintaining full precision vectors. After centering the data, LVQ scales each vector individually (e.g., the local adaptation) and then performs uniform scalar quantization. The per-vector compression of LVQ introduces a negligible accuracy degradation due to an effective usage of all quantization levels. For example, LVQ may reduce the bandwidth by up to ~8x compared to a float32-valued (32-bit floating point valued) vector, greatly accelerating the search. When appropriate, a second-level quantization remainder is used to conduct a final re-ranking to further boost search recall.

The original LVQ stores consecutive logical dimensions sequentially in memory. While convenient, this choice may involve significant effort to unpack (e.g., decompress) encoded dimensions into a more useful form. The Turbo LVQ technology described herein recognizes that consecutive logical dimensions need not be stored consecutively in memory and permutes the order of the logical dimensions to facilitate faster decompression with SIMD instructions.

The technology described herein proposes a similarity search system with Turbo LVQ as a component in the critical execution path. Turbo LVQ is a packing strategy for bit-level encodings (e.g., "dimensions") that partitions each vector into logical blocks. Within each block, dimensions are reordered to enable faster unpacking when using advanced vector extension (AVX) vector instructions. When using 4 bits to quantize each vector dimension, Turbo LVQ may involve only two instructions to unpack sixteen dimensions.

Similarity computations are a fundamental component of end-to-end similarity searches, invoked thousands of times per query. Accelerating this operation has direct and visible effects on overall search performance. Experiments show that when this optimized layout is used, search time is decreased significantly. The result is lower query latency for a given recall or higher recall for a target query latency. As will be discussed in greater detail, embodiments may involve repeatedly shifting and masking an AVX register to iteratively "peel off" logically contiguous bit-level encodings for vector dimensions.

## Introduction

Similarity search - the process of retrieving the most relevant vectors to a given query vector from a large collection of vectors - is a key component of countless classical real-world applications (e.g., recommender systems, advertisement/ad matching, etc.). In recent years, similarity search usages have grown significantly with the rise of deep learning models that can translate semantic affinities into spatial similarities and consequently enable semantic search. As already noted, a prominent example is RAG, which extends the capabilities of generative AI with more factually accurate, up-to-date, and verifiable results.

State-of-the-art methods continue to offer limited throughput and a substantial memory footprint at very large database sizes, making the deployment of end-to-end applications challenging. In these applications, the main computational bottleneck is the computation of similarities (e.g., distances). This computational kernel is invoked thousands of times during each search. Accelerating the similarity computational kernel directly impacts the application QoS (Quality of Service).

Given a database $X_t = \{x_i \in R^d\}$ for $i = 1, 2, ..., n$ containing n vectors in d dimensions, a similarity function $sim: R^d \times R^d \to R$ where a higher value indicates a higher degree of similarity, and a query $q \in R^d$, the similarity search (or nearest neighbor) problem involves finding the $k$ vectors in $X_t$ with maximum similarity to $q$. In most practical applications, accuracy is traded for performance to avoid a linear scan of $X_t$, by relaxing the definition to allow for a certain degree of error. Therefore, some of the retrieved elements (e.g., the approximate nearest neighbors/ANN) may not belong to the ground-truth top $k$ neighbors.

Accuracy of the search is commonly measured using k-recall-at-n (e.g., expressed as a number between zero and one inclusive), which computes the average fraction of the "k" nearest neighbors returned by an approximate search for an ensemble of queries that are found among the "n" true nearest neighbors for each query.

### Graph-based similarity search

Graph-based methods provide fast and highly accurate similarity search and constitute the state-of-the-art in both *static* and *dynamic* cases. These indices build a proximity graph, connecting two nodes if the nodes fulfill a defined neighborhood criterion with demonstrable properties, and use a "greedy" traversal to find the nearest neighbor.

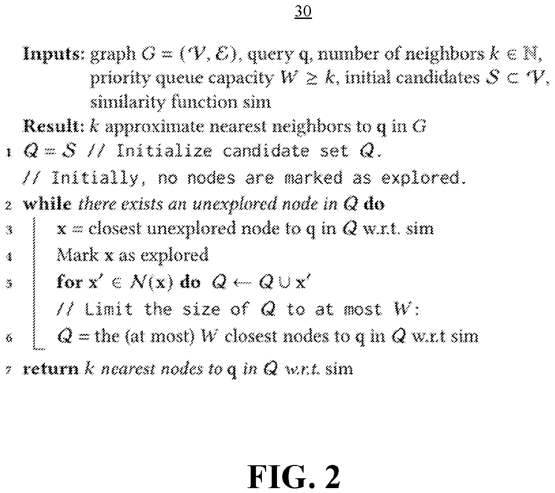

Turning now to FIG. 2, a pseudo code listing 30 demonstrates that a graph can be traversed using a modified greedy best-first approach to retrieve the $k$ approximate nearest vectors to query $q$ with respect to the similarity function *sim*. Graph construction involves building a navigable graph for $X_0$ and performing additions and deletions to update the graph over time.

### Locally-Adaptive Vector Quantization

As already noted, LVQ is a compression technique that uses per-vector scaling and scalar quantization to boost search performance by enabling fast similarity computations and a reduced effective bandwidth, while decreasing memory footprint and hardly impacting accuracy.

Let $\mu = [\mu_1, ..., \mu_d]$ be the sample mean, $\mu = \frac{1}{n}\sum_{i=1}^{n} x_i$, and $u, l: R^d \to R$, defined for a vector $x = [x_1, ..., x_d]$, as

$$u(\mathbf{x}) = \max_j x_j - \mu_j, \qquad \ell(\mathbf{x}) = \min_j x_j - \mu_j. \qquad (1)$$

Let $Q_{B,l,u}: R \to R$ be the scalar quantization function,

$$Q_{B,\ell,u}(x) = \Delta \left\lfloor \frac{x - \ell}{\Delta} + \frac{1}{2} \right\rfloor + \ell, \quad \text{with} \quad \Delta = \frac{u-\ell}{2^B - 1}. \qquad (2)$$

In LVQ, the vector $x$ is represented by a vector $Q(x)$ and, optionally, by another vector $Q_{res}(r)$, obtained by:

performing a first-level encoding of $x$ into $Q(x)$ with $B_1$ bits using

$$Q(\mathbf{x}) = Q_{B_1,\ell(\mathbf{x}),u(\mathbf{x})}(\mathbf{x} - \boldsymbol{\mu}), \qquad (3)$$

by applying $Q_{B,l,u}$ component-wise; and
optionally performing a second-level encoding of the residual vector $r = x - \mu - Q(x)$ into $Q_{res}(r)$, with $B_2$ bits by applying $Q_{B2,-\Delta/2,\Delta/2}$ component-wise (the components of $r$ lie in $[-\Delta/2, \Delta/2]$).

The one-level and the two-level variants are denoted herein by LVQ-B and LVQ-$B_1 \times B_2$, respectively.

LVQ is particularly designed for graph-based similarity searches, with a random memory access pattern. The first-level LVQ vectors are used during graph traversal, which improves the search performance by compressing the vectors into fewer bits and thus reducing the memory bandwidth effectively consumed. Any degradation in search accuracy caused by the scalar quantization errors can be regained by increasing the search window size $W$, at the cost of slowing down the search, and/or by using the second-level residuals to perform a final re-ranking.

**Turbo LVO**

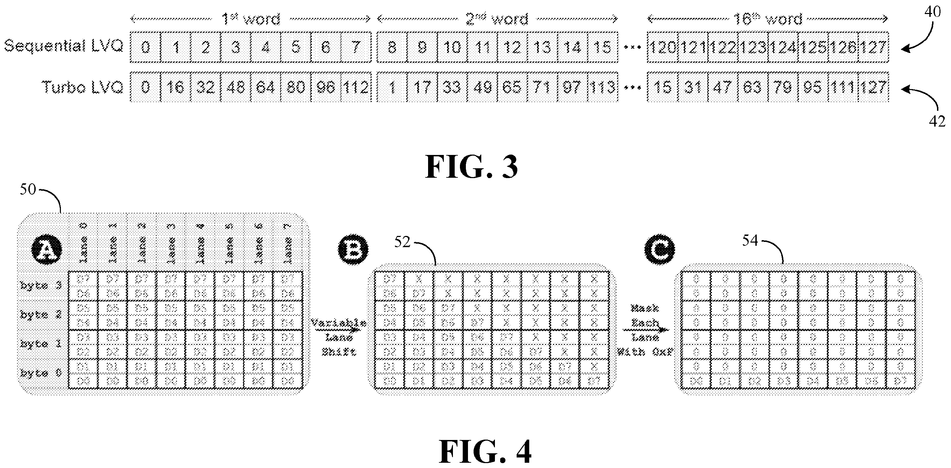

FIG. 3 shows an LVQ memory layout 40 in which consecutive logical dimensions are stored sequentially in memory as 32-bit words (e.g., groups of eight 4-bit dimensions). Before any actual distance computations are performed, each pair of words is unpacked into a SIMD vector with 512 bits, containing sixteen 32-bit unsigned integers. Once the data is in this unpacked format, the quantization is undone and the partial similarity computation is performed for these sixteen dimensions. In total, every unpacking of sixteen dimensions can be performed using seven assembly instructions. Thus, LVQ uses the original dimension ordering to store each vector.

By contrast, an enhanced memory layout 42 demonstrates that Turbo LVQ permutes the dimensions of the database vectors to make decoding more efficient. In the illustrated example, the permutation of the contextual data is applied in groups of 128 dimensions, using 4-bits per dimension bundled in sixteen 32-bit words. Thus, Turbo LVQ uses a permuted memory layout storing groups of 128 dimensions, each encoded with four bits, into 64 bytes of memory. Dimension 0 is stored in the first four bits of the first register lane, dimension 1 is stored in the first four bits of the second register lane, continuing the pattern until dimension 16, which is stored in the second 4 bits of the first register lane. When decoding, the entire 64-bytes block is loaded into a register (e.g., an AVX-512 register) as sixteen lanes of 32-bit integers. Then, the first sixteen dimensions (the lowest four bits of each word) are extracted by simply applying a bitwise mask to each lane. For subsequent groups, a shift is applied before recovering the lowest four bits. With this strategy, unpacking sixteen-dimensions involves only two assembly instructions: a load+mask for the first group and a shift+mask for each following group. Thus, the computational savings of Turbo LVQ pushes even further the graph-based search problem into a natural memory-limited regime.

**Solution Details**

The following illustrates the technology described herein using $B1 = 4$, the mechanism for $B1 = 8$ being conceptually similar. A modern central processing unit (CPU, e.g., host processor) may be used with AVX-512 extensions and support for 32-bit integer and floating-point computations. Some details could vary for other hardware and/or architectures.

FIG. 4 demonstrates that sequential LVQ works by broadcasting a word of bit-packed data across all compute lanes in a vector register and applying a variable shift and mask to each lane (e.g., a default LVQ implementation may store consecutive logical dimensions sequentially in memory). While convenient, this choice may involve significant effort to unpack. For example, the process of extracting packed, encoded dimensions into a more useful form (e.g., unpacking) is shown for sequential LVQ. This unpacked form is usually an 8- or 16-wide SIMD vector of integers. Sequential LVQ uses an unpacking granularity of eight. In a first state 50 (e.g., block "A"), a 32-bit word containing eight 4-bit encodings is broadcasted into eight lanes of a SIMD register. A variable shift is applied to each lane for a second state 52 (e.g., block "B") to obtain different dimensions into the four least significant bits of each lane. Finally, a lane-wise mask is applied to obtain each vector code as a 32-bit unsigned integer in a third state 54 (e.g., block "C"). To obtain a 16-wide SIMD vector, this process is applied to the next eight dimensions and the two 8-wide registers are horizontally concatenated. In total, every unpacking of sixteen dimensions may involve seven assembly instructions. By contrast, the technology described herein leverages the fact that consecutive logical dimensions need not be stored consecutively in memory. Instead, it can be better to store encoded dimensions permuted in memory to facilitate faster decompression with SIMD instructions.

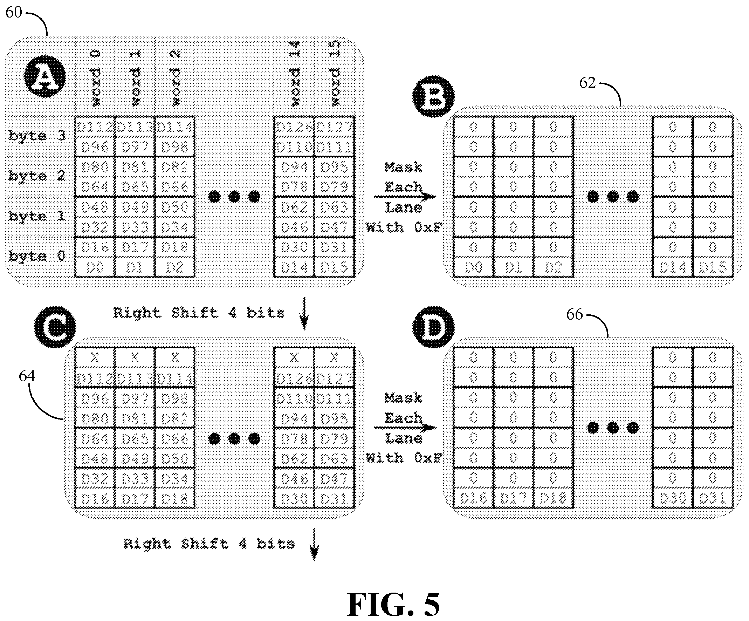

FIG. 5 demonstrates how this result can be accomplished efficiently for 4-bit quantization by storing groups of 128 4-bit codes into 64-bytes of memory. In the illustrated example, efficient code unpacking is enabled by using a block-permuted layout for LVQ encodings. This example assumes 4-bit encodings with 16-compute lanes and eight dimensions per lane. A first state 60 (e.g., block "A") shows the layout in memory. Each 32-bit word contains four bytes and words are sequential in memory. Each dimension encoding occupies 4-bits (e.g., a "nibble", predetermined number of bits). Dimension 0 (D0) is stored in nibble 0 of word 0 and dimension 1 (D1) is stored in nibble 0 of word 1 (e.g., beginning at an offset 4-bytes higher than D0). This pattern continues until D16, which is stored in nibble 1 of word 0. When decoding, the entire 64-block of data is loaded into an AVX-512 register as sixteen lanes of 32-bit integers.

A second state 62 (e.g., block "B") shows how the first sixteen dimensions (D0 to D15) are extracted from the first state 60 by applying a bitwise mask (e.g., non-variable, first bitwise mask application) to each lane to retain the lowest 4-bits. To obtain the next 16 dimensions, a 4-bit right shift is applied to each lane, resulting in a third state 64 (e.g., block "C") and again all but the four least significant bits LSBs are masked out (e.g., via a second bitwise mask application). Thus, the right shift moves logically contiguous bit-level encodings out of the register. Additionally, the first bitwise mask application and the second bitwise mask application zero out data in the plurality of lanes above a pre-determined number of bits (e.g., four least significant bits/LSBs). The result is a fourth state 66 (e.g., block "D"). This process of repeatedly shifting and masking continues until every group of sixteen dimensions has been unpacked, at which point the next group of 128 dimensions is loaded into the register and the process begins again. With this strategy, unpacking sixteen dimensions involves only two assembly instructions: a load and mask for the first group and a shift-plus-mask for each following group (e.g., as opposed to seven instructions involved for sequential LVQ).

If a 64-bit block is not completely filled with dimensions (e.g., which can occur when the number of dimensions is not a multiple of 128), the remaining slots can be padded with zeros. In such a case, the shifting/masking procedure is terminated early and predicated SIMD operations are used for the final unpacked group.

The exact permutation to use depends on the number of lanes to be unpacked at each iteration (e.g., sixteen in the above example) and the number of dimensions stored in each lane (e.g., eight). For example, using 8-bit LVQ with AVX-512, the technology described herein would still unpack sixteen lanes at a time, but would only have four dimensions per lane. If AVX-512 extensions are being used with native support for 16-bit floating point arithmetic, the technology described herein might instead unpack thirty-two lanes at a time. In the second state 62 and the fourth state 66, the integer encodings for each dimension are obtained as 16-lanes of 32-bit integers.

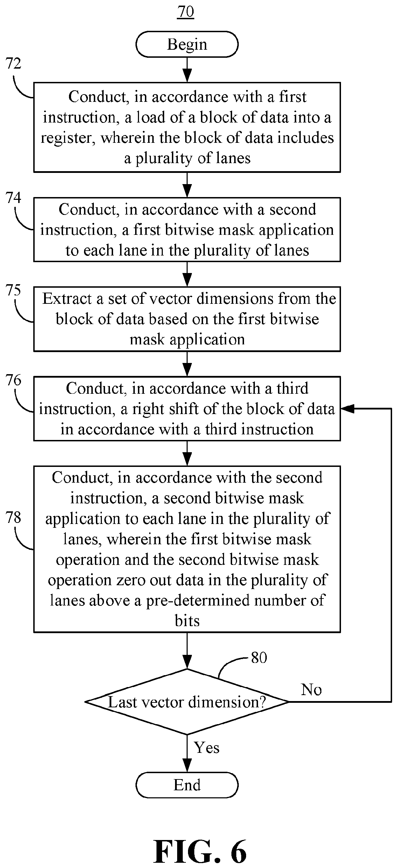

FIG. 6 shows a method 70 of unpacking a block of data. The method 70 may be implemented in one or more modules as a set of logic instructions stored in a machine- or computer-readable storage medium such as random access memory (RAM), read only memory (ROM), programmable ROM (PROM), firmware, flash memory, etc., in hardware, or any combination thereof. For example, hardware implementations may include configurable logic, fixed-functionality logic, or any combination thereof. Examples of configurable logic (e.g., configurable hardware) include suitably configured programmable logic arrays (PLAs), field programmable gate arrays (FPGAs), complex programmable logic devices (CPLDs), and general purpose microprocessors. Examples of fixed-functionality logic (e.g., fixed-functionality hardware) include suitably configured application specific integrated circuits (ASICs), combinational logic circuits, and sequential logic circuits. The configurable or fixed-functionality logic can be implemented with complementary metal oxide semiconductor (CMOS) logic circuits, transistor-transistor logic (TTL) logic circuits, or other circuits.

Computer program code to carry out operations shown in the method 70 can be written in any combination of one or more programming languages, including an object-oriented programming language such as JAVA, SMALLTALK, C++ or the like and conventional procedural programming languages, such as the "C" programming language or similar programming languages. Additionally, logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

Illustrated processing block 72 provides for conducting, in accordance with a first instruction, a load of a block of data into a register, wherein the block of data is to include a plurality of lanes. In an embodiment, the load is conducted in accordance with a similarity search of a directed graph associated with a plurality of vectors. Additionally, the block of data may include contextual data (e.g., in an RAG application) stored in a permuted memory layout. In one example, the contextual data is associated with one or more of a consumer goods, retail, healthcare, medicine, manufacturing, media, entertainment or financial services application. Block 74 conducts, in accordance with a second instruction, a first bitwise mask application (e.g., non-variable) to each lane in the plurality of lanes. Block 75 extracts a set of vector dimensions from the block of data based on the first bitwise mask application. In an embodiment, the set of vector dimensions includes bit-level encodings (e.g., Eq. (3)), wherein each bit-level encoding quantizes a vector dimension in a predetermined number of bits (e.g., four bits/LSBs).

Block 76 conducts, in accordance with a third instruction, a right shift of the block of data. In one example, the right shift moves logically contiguous bit-level encodings out of the register. Block 78 conducts, in accordance with the second instruction, a second bitwise mask application to each lane in the plurality of lanes, wherein the first bitwise mask application and the second bitwise mask application zero out data in the plurality of lanes above the pre-determined number of bits. In an embodiment, the first instruction, the second instruction, and the third instruction are assembly instructions (e.g., instructions in a symbolic code of a low-level assembly language designed for a specific family of processors). A determination may be made at block 80 as to whether the last vector dimension has been processed. If not, the method 70 returns to block 76 and repeats the shift and the second bitwise mask application for all vector dimensions in each lane.

The method 70 therefore enhances performance at least to the extent that the load, the bitwise mask applications and/or the shift reduce the number of instructions involved (e.g., reducing latency during similarity search operations). The load, the bitwise mask applications and/or the shift may also streamline the use of vector data with SIMD instructions.

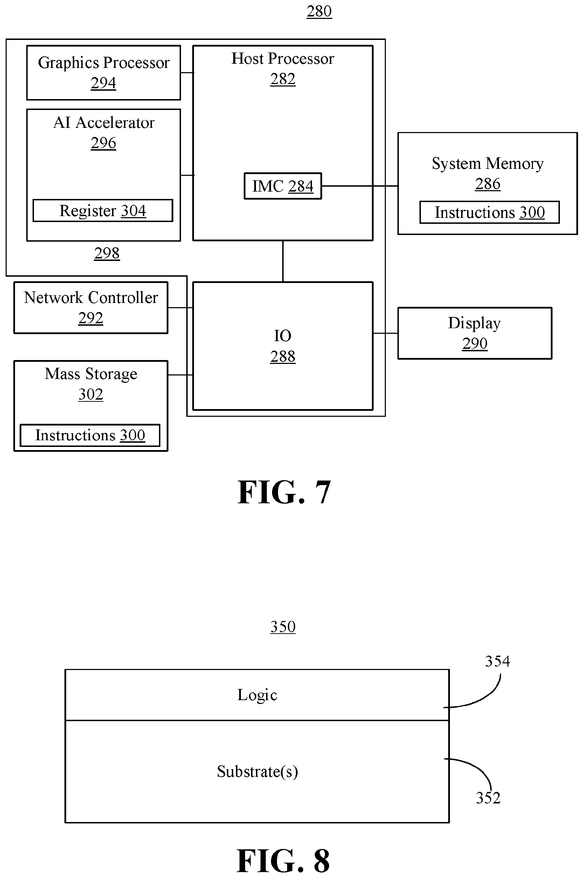

Turning now to FIG. 7, a performance-enhanced computing system 280 is shown. The system 280 may generally be part of an electronic device/platform having computing functionality (e.g., personal digital assistant/PDA, notebook computer, tablet computer, convertible tablet, edge node, server, cloud computing infrastructure), communications functionality (e.g., smart phone), imaging functionality (e.g., camera, camcorder), media playing functionality (e.g., smart television/TV), wearable functionality (e.g., watch, eyewear, headwear, footwear, jewelry), vehicular functionality (e.g., car, truck, motorcycle), robotic functionality (e.g., autonomous robot), Internet of Things (IoT) functionality, drone functionality, etc., or any combination thereof.

In the illustrated example, the system 280 includes a host processor 282 (e.g., central processing unit/CPU) having an integrated memory controller (IMC) 284 that is coupled to a system memory 286 (e.g., dual inline memory module/DIMM including dynamic RAM/DRAM). In an embodiment, an IO (input/output) module 288 is coupled to the host processor 282. The illustrated IO module 288 communicates with, for example, a display 290 (e.g., touch screen, liquid crystal display/LCD, light emitting diode/LED display), mass storage 302 (e.g., hard disk drive/HDD, optical disc, solid state drive/SSD) and a network controller 292 (e.g., wired and/or wireless). The host processor 282 may be combined with the IO module 288, a graphics processor 294, and an AI accelerator 296 (e.g., specialized processor) into a system on chip (SoC) 298. In an embodiment, the AI accelerator 296 includes a register 304.

In an embodiment, the AI accelerator 296 and/or the host processor 282 execute instructions 300 retrieved from the system memory 286 and/or the mass storage 302 to perform one or more aspects of the method 70 (FIG. 6), already discussed. Thus, execution of the instructions 300 causes the AI accelerator 296, the host processor 282 and/or the computing system 280 to conduct a load of a block of data into the register 304, wherein the block of data includes a plurality of lanes, and wherein the load is conducted in accordance with a first instruction. Execution of the instructions 300 also causes the AI accelerator 296, the host processor 282 and/or the computing system 280 to conduct a first bitwise mask application to each lane in the plurality of lanes to extract a set of vector dimensions from the block of data, wherein the first bitwise mask application is conducted in accordance with a second instruction. In an embodiment, the set of vector dimensions includes bit-level encodings, the load is conducted in accordance with a similarity search and the block of data includes contextual data.

For example, the computing system 280 can use the contextual data in variety of RAG settings. For example, in consumer goods and retail applications, the computing system 280 might be deployed in virtual fitting rooms, delivery and installation environments, in-store product-finding assistance environments, demand prediction and inventory planning environments, novel product design environments, etc., to augment pre-trained models with proprietary data. In healthcare and medicine applications, the computing system 280 may be used to assist busy front-line staff, transcribe and summarize medical notes, answer medical questions as a chatbot, inform diagnosis and treatments via predictive analytics, etc., with organization-specific context data. In manufacturing environments, the computing system 280 can be deployed as an expert copilot for technicians, in conversational interactions with machines, in prescriptive and proactive field service, in natural language troubleshooting, in warranty status and documentation, in recovery strategy solutions (e.g., understanding process bottlenecks), and so forth.

In media and entertainment applications, the computing system 280 can be used to perform intelligent search and tailored content delivery, headline and copy development, provide real-time feedback on content quality, personalize playlists, news digests and recommendations, conduct interactive storytelling via viewer choices, make targeted offers and/or subscription plans, monitor network traffic to detect copyright infringement, etc. In financial services applications, the computing system 280 may be used to uncover trading signals, alert traders to vulnerable positions, accelerate underwriting decisions, optimize and rebuild legacy systems, reverse-engineer banking and insurance models, monitor for potential financial crimes and fraud, automate data gathering for regulatory compliance, extract insights from corporate disclosures, etc.

The computing system 280 is therefore considered performance-enhanced at least to the extent that the load and/or the bitwise mask application reduce the number of instructions involved (e.g., reducing latency during similarity search operations). The load and/or the bitwise mask application may also streamline the use of vector data with SIMD instructions.

FIG. 8 shows a semiconductor apparatus 350 (e.g., chip, die, package). The illustrated apparatus 350 includes one or more substrates 352 (e.g., silicon, sapphire, gallium arsenide) and logic 354 (e.g., transistor array and other integrated circuit/IC components) coupled to the substrate(s) 352. In an embodiment, the logic 354 implements one or more aspects of the method 70 (FIG. 6), already discussed.

The logic 354 may be implemented at least partly in configurable or fixed-functionality hardware. In one example, the logic 354 includes transistor channel regions that are positioned (e.g., embedded) within the substrate(s) 352. Thus, the interface between the logic 354 and the substrate(s) 352 may not be an abrupt junction. The logic 354 may also be considered to include an epitaxial layer that is grown on an initial wafer of the substrate(s) 352.

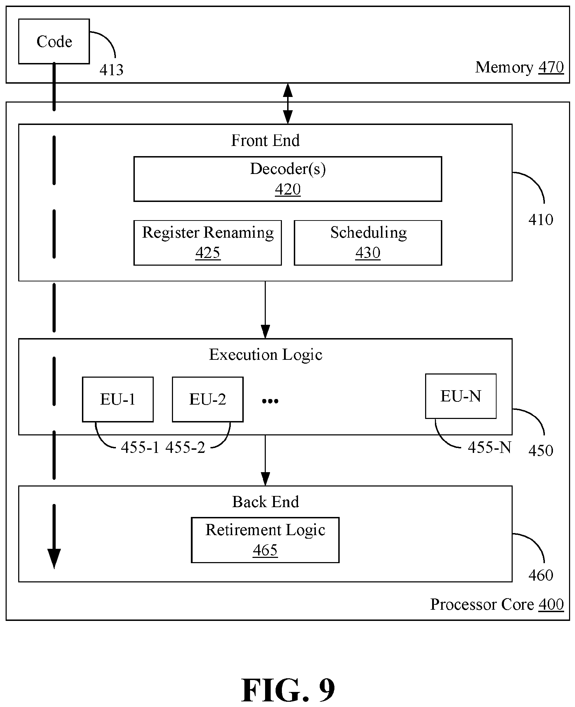

FIG. 9 illustrates a processor core 400 according to one embodiment. The processor core 400 may be the core for any type of processor, such as a micro-processor, an embedded processor, a digital signal processor (DSP), a network processor, or other device to execute code. Although only one processor core 400 is illustrated in FIG. 9, a processing element may alternatively include more than one of the processor core 400 illustrated in FIG. 9. The processor core 400 may be a single-threaded core or, for at least one embodiment, the processor core 400 may be multithreaded in that it may include more than one hardware thread context (or "logical processor") per core.

FIG. 9 also illustrates a memory 470 coupled to the processor core 400. The memory 470 may be any of a wide variety of memories (including various layers of memory hierarchy) as are known or otherwise available to those of skill in the art. The memory 470 may include one or more code 413 instruction(s) to be executed by the processor core 400, wherein the code 413 may implement the method 70 (FIG. 6), already discussed. The processor core 400 follows a program sequence of instructions indicated by the code 413. Each instruction may enter a front end portion 410 and be processed by one or more decoders 420. The decoder 420 may generate as its output a micro operation such as a fixed width micro operation in a predefined format, or may generate other instructions, microinstructions, or control signals which reflect the original code instruction. The illustrated front end portion 410 also includes register renaming logic 425 and scheduling logic 430, which generally allocate resources and queue the operation corresponding to the convert instruction for execution.

The processor core 400 is shown including execution logic 450 having a set of execution units 455-1 through 455-N. Some embodiments may include a number of execution units dedicated to specific functions or sets of functions. Other embodiments may include only one execution unit or one execution unit that can perform a particular function. The illustrated execution logic 450 performs the operations specified by code instructions.

After completion of execution of the operations specified by the code instructions, back end logic 460 retires the instructions of the code 413. In one embodiment, the processor core 400 allows out of order execution but requires in order retirement of instructions. Retirement logic 465 may take a variety of forms as known to those of skill in the art (e.g., reorder buffers or the like). In this manner, the processor core 400 is transformed during execution of the code 413, at least in terms of the output generated by the decoder, the hardware registers and tables utilized by the register renaming logic 425, and any registers (not shown) modified by the execution logic 450.

Although not illustrated in FIG. 9, a processing element may include other elements on chip with the processor core 400. For example, a processing element may include memory control logic along with the processor core 400. The processing element may include I/O control logic and/or may include I/O control logic integrated with memory control logic. The processing element may also include one or more caches.

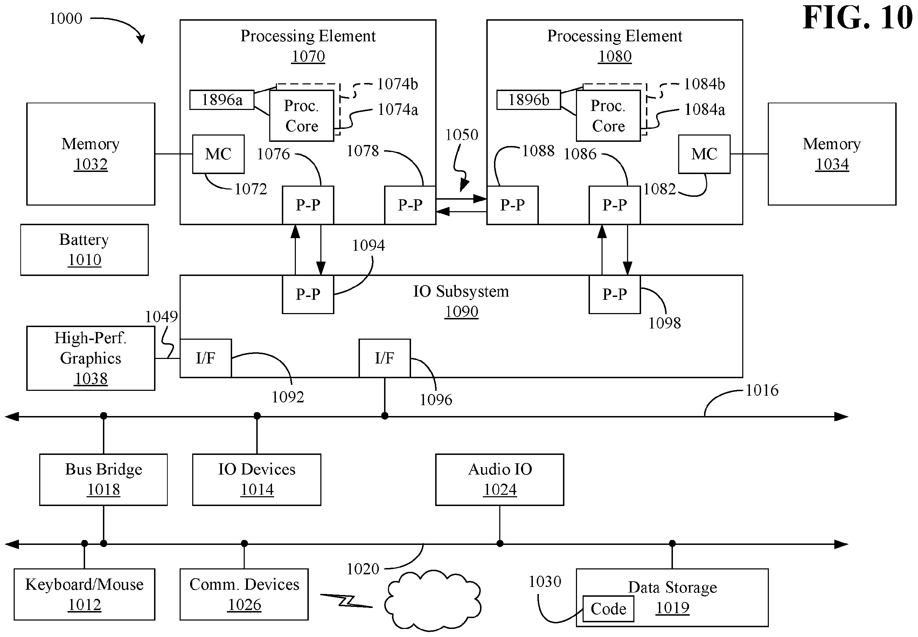

Referring now to FIG. 10, shown is a block diagram of a computing system 1000 embodiment in accordance with an embodiment. Shown in FIG. 10 is a multiprocessor system 1000 that includes a first processing element 1070 and a second processing element 1080. While two processing elements 1070 and 1080 are shown, it is to be understood that an embodiment of the system 1000 may also include only one such processing element.

The system 1000 is illustrated as a point-to-point interconnect system, wherein the first processing element 1070 and the second processing element 1080 are coupled via a point-to-point interconnect 1050. It should be understood that any or all of the interconnects illustrated in FIG. 10 may be implemented as a multi-drop bus rather than point-to-point interconnect.

As shown in FIG. 10, each of processing elements 1070 and 1080 may be multicore processors, including first and second processor cores (i.e., processor cores 1074a and 1074b and processor cores 1084a and 1084b). Such cores 1074a, 1074b, 1084a, 1084b may be configured to execute instruction code in a manner similar to that discussed above in connection with FIG. 9.

Each processing element 1070, 1080 may include at least one shared cache 1896a, 1896b. The shared cache 1896a, 1896b may store data (e.g., instructions) that are utilized by one or more components of the processor, such as the cores 1074a, 1074b and 1084a, 1084b, respectively. For example, the shared cache 1896a, 1896b may locally cache data stored in a memory 1032, 1034 for faster access by components of the processor. In one or more embodiments, the shared cache 1896a, 1896b may include one or more mid-level caches, such as level 2 (L2), level 3 (L3), level 4 (L4), or other levels of cache, a last level cache (LLC), and/or combinations thereof.

While shown with only two processing elements 1070, 1080, it is to be understood that the scope of the embodiments are not so limited. In other embodiments, one or more additional processing elements may be present in a given processor. Alternatively, one or more of processing elements 1070, 1080 may be an element other than a processor, such as an accelerator or a field programmable gate array. For example, additional processing element(s) may include additional processors(s) that are the same as a first processor 1070, additional processor(s) that are heterogeneous or asymmetric to processor a first processor 1070, accelerators (such as, e.g., graphics accelerators or digital signal processing (DSP) units), field programmable gate arrays, or any other processing element. There can be a variety of differences between the processing elements 1070, 1080 in terms of a spectrum of metrics of merit including architectural, micro architectural, thermal, power consumption characteristics, and the like. These differences may effectively manifest themselves as asymmetry and heterogeneity amongst the processing elements 1070, 1080. For at least one embodiment, the various processing elements 1070, 1080 may reside in the same die package.

The first processing element 1070 may further include memory controller logic (MC) 1072 and point-to-point (P-P) interfaces 1076 and 1078. Similarly, the second processing element 1080 may include a MC 1082 and P-P interfaces 1086 and 1088. As shown in FIG. 10, MC's 1072 and 1082 couple the processors to respective memories, namely a memory 1032 and a memory 1034, which may be portions of main memory locally attached to the respective processors.

While the MC 1072 and 1082 is illustrated as integrated into the processing elements 1070, 1080, for alternative embodiments the MC logic may be discrete logic outside the processing elements 1070, 1080 rather than integrated therein.

The first processing element 1070 and the second processing element 1080 may be coupled to an I/O subsystem 1090 via P-P interconnects 1076 1086, respectively. As shown in FIG. 10, the I/O subsystem 1090 includes P-P interfaces 1094 and 1098. Furthermore, I/O subsystem 1090 includes an interface 1092 to couple I/O subsystem 1090 with a high performance graphics engine 1038. In one embodiment, bus 1049 may be used to couple the graphics engine 1038 to the I/O subsystem 1090. Alternately, a point-to-point interconnect may couple these components.

In turn, I/O subsystem 1090 may be coupled to a first bus 1016 via an interface 1096. In one embodiment, the first bus 1016 may be a Peripheral Component Interconnect (PCI) bus, or a bus such as a PCI Express bus or another third generation I/O interconnect bus, although the scope of the embodiments are not so limited.

As shown in FIG. 10, various I/O devices 1014 (e.g., biometric scanners, speakers, cameras, sensors) may be coupled to the first bus 1016, along with a bus bridge 1018 which may couple the first bus 1016 to a second bus 1020. In one embodiment, the second bus 1020 may be a low pin count (LPC) bus. Various devices may be coupled to the second bus 1020 including, for example, a keyboard/mouse 1012, communication device(s) 1026, and a data storage unit 1019 such as a disk drive or other mass storage device which may include code 1030, in one embodiment. The illustrated code 1030 may implement the method 70 (FIG. 6), already discussed. Further, an audio I/O 1024 may be coupled to second bus 1020 and a battery 1010 may supply power to the computing system 1000.

Note that other embodiments are contemplated. For example, instead of the point-to-point architecture of FIG. 10, a system may implement a multi-drop bus or another such communication topology. Also, the elements of FIG. 10 may alternatively be partitioned using more or fewer integrated chips than shown in FIG. 10.

In one example, the technology described herein is incorporated into the Scalable Vector Search (SVS) library from INTEL. SVS delivers fast vector search capabilities, optimizing retrieval times and improving overall system performance. Optimizing graph-based searches using Turbo LVQ as described herein minimizes memory bandwidth requirements while maintaining accuracy. The result is significantly reduced distance calculation latency and higher performance in throughput and memory requirements.

Additional Notes and Examples:

Example 1 includes a performance-enhanced computing system comprising a register, a processor, and a memory coupled to the processor, wherein the memory includes a plurality of instructions, which when executed by the processor, cause the processor to conduct, in accordance with a first instruction, a load of a block of data into the register, wherein the block of data is to include a plurality of lanes, conduct, in accordance with a second instruction, a first bitwise mask application to each lane in the plurality of lanes, and extract a set of vector dimensions from the block of data based on the first bitwise mask application.

Example 2 includes the computing system of Example 1, wherein the plurality of instructions, when executed, further cause the processor to conduct, in accordance with a third instruction, a right shift of the block of data, wherein the right shift moves logically contiguous bit-level encodings out of the register, and conduct, in accordance with the second instruction, a second bitwise mask application to each lane in the plurality of lanes, wherein the first bitwise mask application and the second bitwise mask application are to zero out data in the plurality of lanes above a pre-determined number of bits.

Example 3 includes the computing system of Example 2, wherein the plurality of executable instructions, when executed, further cause the processor to repeat the right shift and the second bitwise mask application for all vector dimensions in each lane.

Example 4 includes the computing system of Example 1, wherein the set of vector dimensions is to include bit-level encodings, wherein each bit-level encoding quantizes a vector dimension in a pre-determined number of bits, wherein the load is conducted further in accordance with a similarity search of a directed graph associated with a plurality of vectors, and wherein the block of data is to include contextual data stored in a permuted memory layout.

Example 5 includes the computing system of Example 4, wherein the contextual data is to be associated with one or more of a consumer goods, retail, healthcare, medicine, manufacturing, media, entertainment or financial services application.

Example 6 includes at least one computer readable storage medium comprising a plurality of instructions, which when executed by a computing system, cause the computing system to conduct, in accordance with a first instruction, a load of a block of data into a register, wherein the block of data is to include a plurality of lanes, conduct, in accordance with a second instruction, a first bitwise mask application to each lane in the plurality of lanes, and extract a set of vector dimensions from the block of data based on the first bitwise mask application.

Example 7 includes the at least one computer readable storage medium of Example 6, wherein the plurality of instructions, when executed, further cause the computing system to conduct, in accordance with a third instruction, a right shift of the block of data, wherein the right shift moves logically contiguous bit-level encodings out of the register, and conduct, in accordance with the second instruction, a second bitwise mask application to each lane in the plurality of lanes, wherein the first bitwise mask application and the second bitwise mask application zero out data in the plurality of lanes above a pre-determined number of bits.

Example 8 includes the at least one computer readable storage medium of Example 7, wherein the plurality of executable instructions, when executed, further cause the computing system to repeat the right shift and the second bitwise mask application for all vector dimensions in each lane.

Example 9 includes the at least one computer readable storage medium of Example 6, wherein the set of vector dimensions is to include bit-level encodings, and wherein each bit-level encoding quantizes a vector dimension in a pre-determined number of bits.

Example 10 includes the at least one computer readable storage medium of Example 6, wherein the load is conducted further in accordance with a similarity search of a directed graph associated with a plurality of vectors.

Example 11 includes the at least one computer readable storage medium of any one of Examples 6 to 10, wherein the block of data is to include contextual data stored in a permuted memory layout.

Example 12 includes the at least one computer readable storage medium of Example 11, wherein the contextual data is to be associated with one or more of a consumer goods, retail, healthcare, medicine, manufacturing, media, entertainment or financial services application.

Example 13 includes a semiconductor apparatus comprising one or more substrates, and logic coupled to the one or more substrates, wherein the logic is implemented at least partly in one or more of configurable or fixed-functionality hardware, the logic to conduct, in accordance with a first instruction, a load of a block of data into a register, and conduct, in accordance with a second instruction, a first bitwise mask application to each lane in the plurality of lanes to, and extract a set of vector dimensions from the block of data based on the first bitwise mask application.

Example 14 includes the semiconductor apparatus of Example 13, wherein the logic is further to conduct, in accordance with a third instruction, a right shift of the block of data, wherein the right shift moves logically contiguous bit-level encodings out of the register, and conduct, in accordance with the second instruction, a second bitwise mask application to each lane in the plurality of lanes, wherein the first bitwise mask application and the second bitwise mask application zero out data in the plurality of lanes above a pre-determined number of bits.

Example 15 includes the semiconductor apparatus of Example 14, wherein the logic is further to repeat the right shift and the second bitwise mask application for all vector dimensions in each lane.

Example 16 includes the semiconductor apparatus of Example 13, wherein the set of vector dimensions is to include bit-level encodings, and wherein each bit-level encoding quantizes a vector dimension in a pre-determined number of bits.

Example 17 includes the semiconductor apparatus of Example 13, wherein the load is conducted further in accordance with a similarity search of a directed graph associated with a plurality of vectors.

Example 18 includes the semiconductor apparatus of any one of Examples 13 to 17, wherein the block of data is to include contextual data stored in a permuted memory layout.

Example 19 includes the semiconductor apparatus of Example 18, wherein the contextual data is to be associated with one or more of a consumer goods, retail, healthcare, medicine, manufacturing, media, entertainment or financial services application.

Example 20 includes the semiconductor apparatus of any one of Examples 13 to 19, wherein the logic coupled to the one or more substrates includes transistor regions that are positioned within the one or more substrates

Example 21 includes a method of operating a performance-enhanced computing system, the method comprising conducting, in accordance with a first instruction, a load of a block of data into a register, wherein the block of data is to include a plurality of lanes, conducting, in accordance with a second instruction, a first bitwise mask application to each lane in the plurality of lanes, and extracting a set of vector dimensions from the block of data based on the first bitwise mask application.

Example 22 includes an apparatus comprising means for performing the method of Example 21.

Example sizes/models/values/ranges may have been given, although embodiments are not limited to the same. As manufacturing techniques (e.g., photolithography) mature over time, it is expected that devices of smaller size could be manufactured. In addition, well known power/ground connections to IC chips and other components may or may not be shown within the figures, for simplicity of illustration and discussion, and so as not to obscure certain aspects of the embodiments. Further, arrangements may be shown in block diagram form in order to avoid obscuring embodiments, and also in view of the fact that specifics with respect to implementation of such block diagram arrangements are highly dependent upon the computing system within which the embodiment is to be implemented, i.e., such specifics should be well within purview of one skilled in the art. Where specific details (e.g., circuits) are set forth in order to describe example embodiments, it should be apparent to one skilled in the art that embodiments can be practiced without, or with variation of, these specific details. The description is thus to be regarded as illustrative instead of limiting.

The term "coupled" may be used herein to refer to any type of relationship, direct or indirect, between the components in question, and may apply to electrical, mechanical, fluid, optical, electromagnetic, electromechanical or other connections. In addition, the terms "first", "second", etc. may be used herein only to facilitate discussion, and carry no particular temporal or chronological significance unless otherwise indicated.

As used in this application and in the claims, a list of items joined by the term "one or more of" may mean any combination of the listed terms. For example, the phrases "one or more of A, B or C" may mean A; B; C; A and B; A and C; B and C; or A, B and C.

Those skilled in the art will appreciate from the foregoing description that the broad techniques of the embodiments can be implemented in a variety of forms. Therefore, while the embodiments have been described in connection with particular examples thereof, the true scope of the embodiments should not be so limited since other modifications will become apparent to the skilled practitioner upon a study of the drawings, specification, and following claims.

**Claims**

1. A computing system comprising:

   a register;
   a processor; and
   a memory coupled to the processor, wherein the memory includes a plurality of instructions, which when executed by the processor, cause the processor to:

   conduct, in accordance with a first instruction, a load of a block of data into the register, wherein the block of data is to include a plurality of lanes;
   conduct, in accordance with a second instruction, a first bitwise mask application to each lane in the plurality of lanes; and
   extract a set of vector dimensions from the block of data based on the first bitwise mask application.

2. The computing system of claim 1, wherein the plurality of instructions, when executed, further cause the processor to:

   conduct, in accordance with a third instruction, a right shift of the block of data, wherein the right shift moves logically contiguous bit-level encodings out of the register, and
   conduct, in accordance with the second instruction, a second bitwise mask application to each lane in the plurality of lanes, wherein the first bitwise mask application and the second bitwise mask application are to zero out data in the plurality of lanes above a pre-determined number of bits.

3. The computing system of claim 2, wherein the plurality of executable instructions, when executed, further cause the processor to repeat the right shift and the second bitwise mask application for all vector dimensions in each lane.

4. The computing system of any of claims 1-3, wherein the set of vector dimensions is to include bit-level encodings, wherein each bit-level encoding quantizes a vector dimension in a pre-determined number of bits, wherein the load is conducted further in accordance with a similarity search of a directed graph associated with a plurality of vectors, and wherein the block of data is to include contextual data stored in a permuted memory layout.

5. The computing system of claim 4, wherein the contextual data is to be associated with one or more of a consumer goods, retail, healthcare, medicine, manufacturing, media, entertainment or financial services application.

6. At least one computer readable storage medium comprising a plurality of instructions, which when executed by a computing system, cause the computing system to:

   conduct, in accordance with a first instruction, a load of a block of data into a register, wherein the block of data is to include a plurality of lanes;
   conduct, in accordance with a second instruction, a first bitwise mask application to each lane in the plurality of lanes; and
   extract a set of vector dimensions from the block of data based on the first bitwise mask application.

7. The at least one computer readable storage medium of claim 6, wherein the plurality of instructions, when executed, further cause the computing system to:

conduct, in accordance with a third instruction, a right shift of the block of data, wherein the right shift moves logically contiguous bit-level encodings out of the register; and

conduct, in accordance with the second instruction, a second bitwise mask application to each lane in the plurality of lanes, wherein the first bitwise mask application and the second bitwise mask application zero out data in the plurality of lanes above a pre-determined number of bits.

8.  The at least one computer readable storage medium of claim 7, wherein the plurality of executable instructions, when executed, further cause the computing system to repeat the right shift and the second bitwise mask application for all vector dimensions in each lane.

9.  The at least one computer readable storage medium of any of claims 6-8, wherein the set of vector dimensions is to include bit-level encodings, wherein each bit-level encoding quantizes a vector dimension in a pre-determined number of bits, wherein the load is conducted further in accordance with a similarity search of a directed graph associated with a plurality of vectors, and wherein the block of data is to include contextual data stored in a permuted memory layout.

10. The at least one computer readable storage medium of claim 9, wherein the contextual data is to be associated with one or more of a consumer goods, retail, healthcare, medicine, manufacturing, media, entertainment or financial services application.

11. A semiconductor apparatus comprising:

one or more substrates; and

logic coupled to the one or more substrates, wherein the logic is implemented at least partly in one or more of configurable or fixed-functionality hardware, the logic to:

conduct, in accordance with a first instruction, a load of a block of data into a register; and

conduct, in accordance with a second instruction, a first bitwise mask application to each lane in the plurality of lanes to; and

extract a set of vector dimensions from the block of data based on the first bitwise mask application.

12. The semiconductor apparatus of claim 11, wherein the logic is further to:

conduct, in accordance with a third instruction, a right shift of the block of data, wherein the right shift moves logically contiguous bit-level encodings out of the register; and

conduct, in accordance with the second instruction, a second bitwise mask application to each lane in the plurality of lanes, wherein the first bitwise mask application and the second bitwise mask application zero out data in the plurality of lanes above a pre-determined number of bits.

13. The semiconductor apparatus of claim 12, wherein the logic is further to repeat the right shift and the second bitwise mask application for all vector dimensions in each lane.

14. The semiconductor apparatus of any of claims 11-13, wherein the set of vector dimensions is to include bit-level encodings, wherein each bit-level encoding quantizes a vector dimension in a pre-determined number of bits, wherein the load is conducted further in accordance with a similarity search of a directed graph associated with a plurality of vectors, and wherein the block of data is to include contextual data stored in a permuted memory layout.

15. The semiconductor apparatus of claim 14, wherein the contextual data is to be associated with one or more of a consumer goods, retail, healthcare, medicine, manufacturing, media, entertainment or financial services application.

**FIG. 1**

<u>30</u>

**Inputs**: graph $G = (\mathcal{V}, \mathcal{E})$, query **q**, number of neighbors $k \in \mathbb{N}$,
priority queue capacity $W \geq k$, initial candidates $S \subset \mathcal{V}$,
similarity function sim

**Result**: $k$ approximate nearest neighbors to **q** in $G$

$Q = S$ // Initialize candidate set $Q$.

// Initially, no nodes are marked as explored.

**while** *there exists an unexplored node in $Q$* **do**

    **x** = closest unexplored node to q in $Q$ w.r.t. sim

    Mark **x** as explored

    **for** $\mathbf{x}' \in \mathcal{N}(\mathbf{x})$ **do** $Q \leftarrow Q \cup \mathbf{x}'$

    // Limit the size of $Q$ to at most $W$:

    $Q$ = the (at most) $W$ closest nodes to q in $Q$ w.r.t sim

**return** $k$ *nearest nodes to* **q** *in $Q$* w.r.t. sim

# FIG. 2

EP 4 617 863 A1

**FIG. 3**

**FIG. 4**

EP 4 617 863 A1

FIG. 5

<u>70</u>

Begin

72

Conduct, in accordance with a first instruction, a load of a block of data into a register, wherein the block of data includes a plurality of lanes

74

Conduct, in accordance with a second instruction, a first bitwise mask application to each lane in the plurality of lanes

75

Extract a set of vector dimensions from the block of data based on the first bitwise mask application

76

Conduct, in accordance with a third instruction, a right shift of the block of data in accordance with a third instruction

78

Conduct, in accordance with the second instruction, a second bitwise mask application to each lane in the plurality of lanes, wherein the first bitwise mask operation and the second bitwise mask operation zero out data in the plurality of lanes above a pre-determined number of bits

80

Last vector dimension?

No

Yes

End

**FIG. 6**

280

Graphics Processor
294

Host Processor
282

AI Accelerator
296

IMC 284

System Memory
286

Instructions 300

Register 304

298

Network Controller
292

IO
288

Display
290

Mass Storage
302

Instructions 300

## FIG. 7

350

354

Logic

Substrate(s)

352

## FIG. 8

**FIG. 9**

**FIG. 10**

EP 4 617 863 A1

# EP 4 617 863 A1

Europäisches
Patentamt
European
Patent Office
Office européen
des brevets

## EUROPEAN SEARCH REPORT

**Application Number**

EP 25 15 8057

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Aguerrebere Cecilia ET AL: "Locally-Adaptive Quantization for Streaming Vector Search", arXiv.org, 3 February 2024 (2024-02-03), pages 1-23, XP093280247, Retrieved from the Internet: URL:https://arxiv.org/pdf/2402.02044 * page 1, line 6 - line 8 * * page 3, right-hand column, line 13 - line 14 * * page 3, right-hand column, line 45 - line 46 * * page 3, right-hand column, line 46 - line 48 * * page 3, right-hand column, line 48 - line 52 * * page 15, line 7 * * page 15, line 10 * * page 15, line 12 - line 13 * ----- | 1-15 | INV. G06F9/30 G06F9/38 G06N3/02 |
| | | | TECHNICAL FIELDS SEARCHED (IPC) G06F G06N |

The present search report has been drawn up for all claims

| Place of search | Date of completion of the search | Examiner |
|---|---|---|
| The Hague | 17 July 2025 | Gratia, Romain |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63565124